# EUROPÄISCHE PATENTANMELDUNG

(11) **EP 1 396 748 A2**
(43) Veröffentlichungstag der Anmeldung: **10.03.2004**
(21) Anmeldenummer: 03019735.4
(22) Anmeldetag: 29.08.2003
(51) Int. Cl.: G02B 27/01, B62D 15/02, B60Q 1/48

(54) **Head-Up-Display für ein Kraftfahrzeug**

(30) Priorität: 04.09.2002 DE 10240682
(71) Anmelder: ADAM OPEL AG, 65423 Rüsselsheim (DE)
(72) Erfinder: Wagner, Nikolas, Dr., 65345 Eltville-Rauenthal (DE)

(57) **Zusammenfassung**

Ein Head-Up-Display für ein Kraftfahrzeug dient zur Darstellung von Informationen für einen Fahrer (7) in einem virtuellen Bild (8) mittels eines Projektors (2). Der Projektor (2) ist in einem Heckbereich (4) des Kraftfahrzeuges angeordnet und projiziert das virtuelle Bild (8) hinter eine Heckscheibe (9).

Bezugszeichenliste

- 1.: Head-Up-Display
- 2.: Projektor
- 3.: Hutablage
- 4.: Heckbereich
- 5.: Parkassistenz-System
- 6.: Sensor
- 7.: Fahrer
- 8.: virtuelles Bild
- 9.: Heckscheibe
- 10.: Rückspiegel

## Beschreibung

Die Erfindung bezieht sich auf ein Head-Up-Display für ein Kraftfahrzeug zur Darstellung von Informationen für einen Fahrer in einem virtuellen Bild mittels eines Projektors.

Ein Head-Up-Display ist als System zur Anzeige von Informationen bekannt. Anfänglich wurde dieses System in der Luftfahrttechnik eingesetzt, um einem Piloten Informationen über den Betriebszustand des Flugzeuges anzuzeigen. Ein Head-Up-Display erzeugt ein Bild der angezeigten Informationen, das von dem Piloten unmittelbar in dessen Sichtfeld wahrgenommen wird, weshalb es zum Ablesen der Informationen nicht erforderlich ist, den Blick auf eine Instrumententafel zu richten. Seit einiger Zeit werden Head-Up-Displays auch in Kraftfahrzeugen eingesetzt.

Die DE 198 16 647 A1 offenbart eine Vorrichtung zur Verbesserung des Kontrastes der Anzeige eines Head-Up-Displays in einem Kraftfahrzeug, wobei die Windschutzscheibe vom Fahrzeugführer aus betrachtet in einem bestimmten Raumwinkel dunkel getönt ist und wobei mittels des Head-Up-Displays angezeigte Informationen für den Fahrzeugführer in diesem bestimmten Raumwinkel sichtbar sind, wobei andere Informationen in Geradeausrichtung sichtbar sind.

Darüber hinaus beschreibt die DE 198 13 300 A1 eine Anzeigevorrichtung, insbesondere ein Insasseninformationssystem für ein Kraftfahrzeug, mit einer Einrichtung zum Projizieren wenigstens eines virtuellen Bildes vor einer Windschutzscheibe des Kraftfahrzeuges (Head-Up-Display). Eine Position des wenigstens einen virtuellen Bildes vor der Windschutzscheibe ist in Abhängigkeit wenigstens eines Fahrzeugparameters veränderlich.

Des Weiteren sind aus der Praxis Parkassistenz-Systeme bekannt, die einen Fahrer eines Kraftfahrzeuges beim Einparken unterstützen , indem sie eine Entfernung eines Kraftfahrzeuges zu einem Hindernis messen und eine optische Anzeigeeinrichtung zur Warnung des Fahrers vor einer abstandsbedingten Kollision ansteuern.

Es ist Aufgabe der Erfindung, ein Head-Up-Display der eingangs genannten Art zu schaffen, das den Komfort des Fahrers in bestimmten Fahrsituationen steigert.

Erfindungsgemäß wird die Aufgabe dadurch gelöst, dass der Projektor in einem Heckbereich des Kraftfahrzeuges angeordnet ist und das virtuelle Bild hinter eine Heckscheibe projiziert.

Aufgrund dieser Maßnahmen kann der Fahrer das projizierte Bild entweder über den Rückspiegel oder bei einem Blick durch die Heckscheibe, beispielsweise vor einem Überholvorgang oder bei einer Rückwärtsfahrt, wahrnehmen.

Bei einem Kraftfahrzeug, das als Limousine, Schrägheckfahrzeug, Coupè oder dergleichen ausgebildet ist, ist bevorzugt der Projektor in eine Hutablage des Kraftfahrzeuges integriert.

Bei einem so genannten Van oder Kombi-Kraftfahrzeug ist in der Regel keine Hutablage vorhanden, daher ist zweckmäßigerweise der Projektor in einer Heckklappenverkleidung des Kraftfahrzeuges untergebracht. Alternativ dazu ist vorzugsweise der Projektor in einem Fahrzeughimmel des Kraftfahrzeuges installiert.

In Ausgestaltung der Erfindung bringt der Projektor Informationen bezüglich der Entfernung des Kraftfahrzeuges zu einem Hindernis in seiner Umgebung zur Darstellung. Solche Informationen benötigt der Fahrer eines Kraftfahrzeuges nicht derart häufig, dass er sie permanent im Blickfeld haben muss. Meist sind solche Informationen während einer Rückwärtsfahrt erforderlich, bei der dem Fahrer der komplette Überblick über den rückseitigen Bereich des Kraftfahrzeuges fehlt. Während einer Rückwärtsfahrt ist es ohnehin erforderlich, dass der Fahrer seinen Blick durch die Heckscheibe richtet oder in den Rückspiegel blickt, um die Umgebung hinter dem Kraftfahrzeug zu beobachten. Hierbei stehen ihm dann die Informationen des Head-Up-Displays zur Verfügung, die ihm die Rückwärtsfahrt erleichtern.

Vorteilhafterweise stellt der Projektor Informationen bezüglich Lenkanweisungen zur Vermeidung einer Kollision mit einem Hindernis dar. Auch solche Informationen werden nicht ständig, sondern vielmehr in beengten Situationen, die mit langsamer Fahrt bewältigt werden, benötigt. Oftmals sind Lenkanweisungen auch während einer Rückwärtsfahrt, beispielsweise beim Einparken des Kraftfahrzeuges, erforderlich. In diesen Situationen, in der das Kraftfahrzeug in der Regel mit einer langsamen Geschwindigkeit bewegt wird, besteht für den Fahrer die Möglichkeit, die Informationen über den Rückspiegel oder durch die Heckscheibe wahrzunehmen.

Nach einer vorteilhaften Weiterbildung der Erfindung dient der Projektor als Anzeigeeinrichtung eines Parkassistenz-Systems. Das Parkassistenz-System unterstützt den Fahrer beim Einparken mit dem Kraftfahrzeug, wozu es mittels dem als Head-Up-Display ausgebildeten Mensch-Maschine-Interface eine optische Unterstützung zur Vermeidung einer Kollision liefert. Das Head-Up-Display stellt sowohl die Anzeige optischer Anweisungen an den Fahrer als auch die Beobachtung des rückwärtigen Verkehrsraums durch den Fahrer sicher, da diesem die angezeigten Informationen als hinter dem Fahrzeug schwebend erscheinen. Die visuelle Aufnahme der Informationen des Head-Up-Displays und der Umgebung des Kraftfahrzeuges erfolgt ohne eine jeweils erneute Fokussierung des Auges des Fahrers bei einem Wechsel der Betrachtung von Anzeigeeinrichtung und Umgebung. Zusätzlich kann das Parkassistenz-System eine akustische Einrichtung umfassen, die den Fahrer vor einer Kollision warnt.

Nach einer Weiterbildung des Erfindungsgedankens dient der Projektor als Anzeigeeinrichtung eines Spurwechselassistenz-Systems. Ein solches System, das beispielsweise eine Unterstützung des Fahrers bei einem Überhohlvorgang liefert, findet zunehmend weitere Verbreitung.

Vorzugsweise ist das Parkassistenz-System und/oder das Spurwechselassistenz-System mit Sensoren zur Messung der Entfernung von dem Kraftfahrzeug zu einem Hindernis in der Umgebung des Kraftfahrzeuges gekoppelt. Die Signale der Sensoren werden nach entsprechender Auswertung von dem Parkassistenz-System und/oder das Spurwechselassistenz-System als Informationen für den Fahrer oder Anweisungen an diesen auf dem Head-Up-Display dargestellt

Zweckmäßigerweise ist das Parkassistenz-System und/oder das Spurwechselassistenz-System mit Sensoren zur Hell-Dunkelfeld-Erkennung auf einer Fahrbahn gekoppelt. Die Sensoren zur Hell-Dunkelfeld-Erkennung ermöglichen beispielsweise die Auswertung eines Verlaufs heller Spurbegrenzungslinien auf einer dunklen Fahrbahnoberfläche, so dass eine rechnergesteuerte Ermittlung der Position des Kraftfahrzeuges auf der Fahrbahn möglich ist.

Bevorzugt berechnet das Parkassistenz-System aus den Messdaten der Sensoren zur Entfernungsmessung und/oder der Sensoren zur Hell-Dunkelfeld-Erkennung die Größe einer Parklücke. Das Parkassistenz-System kann sonach neben Kollisionswarnungen auch exakte Lenkanweisungen bezüglich des Einparkens in die von dem Fahrer ausgewählte Parklücke über das Head-Up-Display an den Fahrer liefern.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im Folgenden anhand eines Ausführungsbeispieles unter Bezugnahme auf die zugehörige Zeichnung näher erläutert. Die einzige Fig. zeigt eine schematische Darstellung eines Kraftfahrzeuges mit einem erfindungsgemäßen Head-Up-Display.

Das Kraftfahrzeug weist ein Head-Up-Display 1 mit einem Projektor 2 auf, der in einer Hutablage 3 im Heckbereich 4 des Kraftfahrzeuges untergebracht ist. Der Projektor 2 ist mit einem Parkassistenz-System 5 gekoppelt, das wiederum mit Sensoren 6 zur Messung der Entfernung des Kraftfahrzeuges zu einem Hindernis in der Umgebung des Kraftfahrzeuges in Verbindung steht. Aus den Messwerten der Sensoren 6 erzeugt das Parkassistenz-System 5 Informationen bezüglich der Entfernung zu dem Hindernis sowie Lenkanweisungen an einen Fahrer 7 zur Vermeidung einer Kollision mit dem Hindernis, deren Anzeige über den Projektor 2 erfolgt.

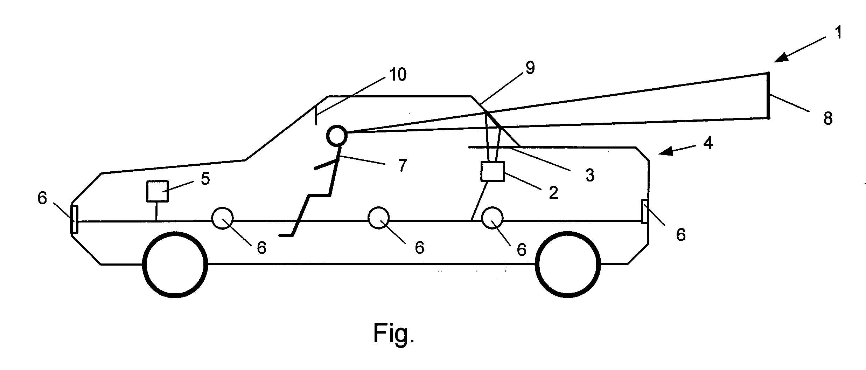

Der Projektor 2 erzeugt ein diesbezügliches virtuelles Bild 8 hinter einer Heckscheibe 9 des Kraftfahrzeuges, das der Fahrer 7 bei einer Beobachtung des rückwärtigen Verkehrsraums entweder direkt durch die Heckscheibe 9 oder durch einen Rückspiegel 10 wahrnimmt.

## Patentansprüche

1. Head-Up-Display für ein Kraftfahrzeug zur Darstellung von Informationen für einen Fahrer (7) in einem virtuellen Bild (8) mittels eines Projektors (2), **dadurch gekennzeichnet, dass** der Projektor (2) in einem Heckbereich (4) des Kraftfahrzeuges angeordnet ist und das virtuelle Bild (8) hinter eine Heckscheibe (9) projiziert.

2. Head-Up-Display nach Anspruch 1, **dadurch gekennzeichnet, dass** der Projektor (2) in eine Hutablage (3) des Kraftfahrzeuges integriert ist.

3. Head-Up-Display nach Anspruch 1, **dadurch gekennzeichnet, dass** der Projektor (2) in einer Heckklappenverkleidung des Kraftfahrzeuges untergebracht ist.

4. Head-Up-Display nach Anspruch 1, **dadurch gekennzeichnet, dass** der Projektor (2) in einem Fahrzeughimmel des Kraftfahrzeuges installiert ist.

5. Head-Up-Display nach einem der Ansprüche 1 bis 4, **dadurch gekennzeichnet, dass** der Projektor (2) Informationen bezüglich der Entfernung des Kraftfahrzeuges zu einem Hindernis in seiner Umgebung zur Darstellung bringt.

6. Head-Up-Display nach einem der Ansprüche 1 bis 5, **dadurch gekennzeichnet, dass** der Projektor (2) Informationen bezüglich Lenkanweisungen zur Vermeidung einer Kollision mit einem Hindernis darstellt.

7. Head-Up-Display nach einem der Ansprüche 1 bis 6, **dadurch gekennzeichnet, dass** der Projektor (2) als Anzeigeeinrichtung eines Parkassistenz-Systems (5) dient.

8. Head-Up-Display nach einem der Ansprüche 1 bis 7, **dadurch gekennzeichnet, dass** der Projektor (2) als Anzeigeeinrichtung eines Spurwechselassistenz-Systems dient.

9. Head-Up-Display nach Anspruch 7 oder 8, **dadurch gekennzeichnet, dass** das Parkassistenz-System (5) und/oder das Spurwechselassistenz-System mit Sensoren (6) zur Messung der Entfernung von dem Kraftfahrzeug zu einem Hindernis in der Umgebung des Kraftfahrzeuges gekoppelt ist.

10. Head-Up-Display nach Anspruch 7 oder 8, **dadurch gekennzeichnet, dass** das Parkassistenz-System (5) und/oder das Spurwechselassistenz-System mit Sensoren zur Hell-Dunkelfeld-Erkennung auf einer Fahrbahn gekoppelt ist.

11. Head-Up-Display nach einem der Ansprüche 7 bis 10, **dadurch gekennzeichnet, dass** das Parkassistenz-System (5) aus den Messdaten der Sensoren (6) zur Entfernungsmessung und/oder der Sensoren zur Hell-Dunkelfeld-Erkennung die Größe einer Parklücke berechnet.
